# EUROPÄISCHE PATENTANMELDUNG

(11) **EP 1 459 965 A2**
(43) Veröffentlichungstag der Anmeldung: **22.09.2004**
(21) Anmeldenummer: 04002370.7
(22) Anmeldetag: 03.02.2004
(51) Int. Cl.: B62H 5/14, E05B 71/00

(54) **Rahmenschloss**

(30) Priorität: 05.03.2003 DE 10309599
(71) Anmelder: ABUS August Bremicker Söhne KG, 58300 Wetter-Volmarstein (DE)
(72) Erfinder:
(74) Vertreter: Manitz, Finsterwald & Partner GbR

(57) **Zusammenfassung**

Ein Rahmenschloss zum Anbau an einen Hinterbau eines Zweirades umfasst zwei an voneinander beabstandeten Streben des Hinterbaus zu befestigende Befestigungsbereiche (28,28'), von denen mindestens einer eine Befestigungsöffnung (30,30') aufweist, durch die ein Bolzen zur Befestigung an einer der Streben oder einer Halterung an einer der Streben führbar ist, und wenigstens ein zusammen mit dem Bolzen bewegliches Abstützmittel (32,32') zum Abstützen des in der Befestigungsöffnung (30,30') angeordneten Bolzens auf dem Befestigungsbereich (28,28'), wobei die Befestigungsöffnung in wenigstens zwei zueinander orthogonalen, quer zur Durchtrittsrichtung des Bolzens verlaufenden Richtungen einen größeren Durchmesser aufweist als der Bolzen, so dass die Lage des durch das Abstützmittel (32,32') auf dem Befestigungsbereich (28,28') abgestützten Bolzens in der Befestigungsöffnung (30,30') unabhängig in zwei zueinander orthogonalen Richtungen an eine Geometrie des Hinterbaus anpassbar ist.

## Beschreibung

Die vorliegende Erfindung betrifft ein Rahmenschloss für ein Zweirad.

Derartige Rahmenschlösser sind grundsätzlich bekannt. Sie können insbesondere am Hinterbau eines Fahrrads im Bereich des Hinterrades befestigt werden. Die Rahmenschlösser besitzen einen Lagerschenkel und einen Aufnahmeschenkel, die gemeinsam einen Schließbereich des Rahmenschlosses zur Aufnahme eines Hinterrades des Fahrrads umgeben. In oder an dem Lagerschenkel ist ein Rundbügel gelagert, der zwischen einer Freigabestellung und einer Schließstellung bewegt werden kann. In der Freigabestellung ist der Schließbereich des Rahmenschlosses freigegeben, während in der Schließstellung der Rundbügel den Schließbereich und damit das Hinterrad durchquert und von dem Aufnahmeschenkel aufgenommen wird. Dadurch ist das in dem Schließbereich aufgenommene Hinterrad blockiert und das Zweirad somit gegen einen unbefugten Gebrauch gesichert.

Die Befestigung derartiger Rahmenschlösser erfolgt dabei üblicherweise an zwei Streben, die von der Montageposition des Hinterrades aus voneinander beabstandet in den Bereich der Sattelstütze bzw. der Muffe für die Sattelstütze führen.

Die Befestigung eines solchen Rahmenschlosses an den Streben des Hinterbaus erweist sich jedoch als schwierig, wenn nur ein Rahmenschlosstyp für verschiedene Fahrradtypen verwendet werden soll. Dies ist darauf zurückzuführen, dass die Streben ausgehend von der Sattelstütze V-förmig in Richtung der Ausfallenden auseinander laufen und im Bereich einer Felge des Hinterrades nicht unbedingt für alle Fahrräder den gleichen Abstand voneinander aufweisen. Insbesondere finden sich bei neueren Fahrrädern sehr verschiedenartige Rahmengeometrien, bei denen gerade die Streben des Hinterbaus sehr unterschiedlich verlaufen können.

In vertikaler Richtung muss das Rahmenschloss verschieden geformte Felgen, Reifen und Schutzbleche, die auch unterschiedlich beabstandet sein können, umschließen.

Bei bekannten Rahmenschlössern werden zur Befestigung Langlöcher in einem Versteifungsbereich der Rahmenschlösser verwendet, durch die entsprechende Schrauben zur Befestigung an den Streben geführt werden. Die Langlöcher erlauben dabei eine kontinuierliche Verstellung der Schrauben an dem Rahmenschloss in der einen durch das Langloch vorgegebenen Richtung, nicht jedoch in einer Richtung quer dazu. Um eine Verstellmöglichkeit auch in einer anderen Richtung bereitzustellen, werden entweder mehrere parallel verlaufende Langlöcher verwendet oder T-förmige Durchbrüche. Angesichts der Vielfalt der Rahmengeometrien ist eine genaue Anpassung solcher Befestigungen an die Rahmengeometrie jedoch oft schwierig und manchmal gar nicht möglich.

Der vorliegenden Erfindung liegt daher die Aufgabe zugrunde, ein Rahmenschloss bereitzustellen, das universell an den Streben verschiedener Hinterbauten von Fahrrädern einfach aber korrekt ausgerichtet angebracht werden kann.

Die Aufgabe wird gelöst durch ein Rahmenschloss mit den Merkmalen des Anspruchs 1.

Das erfindungsgemäße Rahmenschloss zum Anbau an einen Hinterbau eines Zweirades umfasst zwei an voneinander beabstandeten Streben des Hinterbaus zu befestigende Befestigungsbereiche, von denen mindestens einer eine Befestigungsöffnung aufweist, durch die ein Bolzen zur Befestigung an einer der Streben oder einer Halterung an einer der Streben führbar ist, und wenigstens ein zusammen mit dem Bolzen bewegliches Abstützmittel zum Abstützen des in der Befestigungsöffnung angeordneten Bolzens auf dem Befestigungsbereich, wobei die Befestigungsöffnung in wenigstens zwei zueinander orthogonalen, quer zur Durchtrittsrichtung des Bolzens verlaufenden Richtungen einen größeren Durchmesser aufweist als der Bolzen, so dass die Lage des durch das Abstützmittel auf dem Befestigungsbereich abgestützten Bolzens in der Befestigungsöffnung unabhängig in zwei zueinander orthogonalen Richtungen an eine Geometrie des Hinterbaus anpassbar ist.

Um das erfindungsgemäße Rahmenschloss an Streben unterschiedlicher Hinterbauten befestigen zu können, ist es erfindungsgemäß also vorgesehen, dass der Bolzen zusammen mit dem Abstützmittel auf dem Befestigungsbereich bewegbar ist, wobei der Bolzen durch die Befestigungsöffnung tritt.

Dazu weist die Befestigungsöffnung in wenigstens zwei zueinander orthogonalen, quer zur Durchtrittsrichtung des Bolzens verlaufenden Richtungen einen größeren Durchmesser auf als der Bolzen, so dass die Lage des durch das Abstützmittel auf dem Befestigungsbereich abgestützten Bolzens in der Befestigungsöffnung unabhängig in zwei zueinander orthogonalen Richtungen an eine Geometrie des Hinterbaus anpassbar ist. Die Befestigungsöffnung ist dabei insbesondere so ausgebildet, dass eine Bewegung des Abstützmittels mit dem Bolzen in den beiden Richtungen kontinuierlich erfolgen kann. Der Durchmesser der Befestigungsöffnung ist daher in den genannten Richtungen deutlich größer als der Durchmesser des vorgegebenen Bolzens.

Durch die kontinuierliche Verstellbarkeit des Bolzens mit dem Abstützmittel unabhängig in zwei zueinander orthogonalen Richtungen wird eine kontinuierliche und genaue Anpassung der Befestigung des Rahmenschlosses an verschiedene Hinterbaugeometrien mit einfachen Mitteln ermöglicht.

Wenn der Bolzen in der Befestigungsöffnung angeordnet ist, dient das Abstützmittel dazu, den Bolzen auf dem Befestigungsbereich abzustützen. Auf den Bolzen wirkende Zugkräfte in Richtung auf die Strebe können so auf den Befestigungsbereich übertragen werden, der dann gegen die Strebe bzw. die Halterung an der Strebe, beispielsweise einen angeschweißten oder -gelöteten Sockel mit einem Innengewinde gezogen wird.

Um eine Abstützung zu ermöglichen, ist der Durchmesser des Abstützmittels in wenigstens einer Richtung größer als der Durchmesser der Befestigungsöffnung, so dass das Abstützmittel bei der Befestigung an wenigstens zwei Punkten auf dem Befestigungsbereich aufliegt.

Weiterbildungen und bevorzugte Ausführungsformen der Erfindung sind in der Beschreibung, den Ansprüchen und den Zeichnungen beschrieben.

Um eine gute Anpassung an Strebengeometrien an dem Hinterbau zu ermöglichen, ist es bevorzugt, dass die Befestigungsöffnung in einer Richtung im Wesentlichen entlang der Strebe eine größere Weite aufweist als quer dazu. Damit wird der Tatsache Rechnung getragen, dass häufig eine größere Anpassung in Richtung der Strebe nötig ist, als quer dazu. Vorzugsweise ist die Befestigungsöffnung wenigstens um ein Drittel größer als der Durchmesser des Bolzens.

Grundsätzlich kann das Abstützmittel beliebig ausgebildet sein. Beispielsweise kann als Abstützmittel eine Schraube verwendet werden, deren Gewindeschaft zur Befestigung verwendet wird und deren entsprechend ausgebildeter Kopf auf dem Befestigungsbereich abstützbar ist, wenn der Gewindeschaft durch die Befestigungsöffnung geführt wird. Es ist jedoch bevorzugt, dass das Abstützmittel einen mit dem Gewindeschaft verbundenen Kopf oder eine auf einen Bolzen aufschraubbare Mutter und ein Abstützelement mit einer Abstützelernentöffnung, durch die der Bolzen bzw. Gewindeschaft, nicht aber der Kopf bzw. die Mutter führbar ist, aufweist. Der Kopf oder die Mutter kann dabei insbesondere einen maximalen Durchmesser aufweisen, der kleiner ist, als der kleinste Durchmesser der Befestigungsöffnung. Bei Verwendung einer Mutter kann der Bolzen an der Strebe direkt oder indirekt befestigt sein, was ein Aufstecken des Rahmenschlosses bei der Montage erlaubt, so dass das Abstützelement und die Mutter dann einfach aufgesetzt werden können. Andernfalls wird zusätzlich zu dem Abstützelement eine Schraube verwendet, deren Kopf auf dem Abstützelement abstützbar ist und deren Gewindeschaft zur Befestigung an einer Halterung an der Strebe, beispielsweise einem Sockel mit Innengewinde, verwendet wird. Auf diese Weise wird eine einfache Befestigung erhalten, bei der insbesondere handelsübliche, einfach herstellbare Schrauben verwendet werden können.

Grundsätzlich genügt es, dass zur Befestigung nur ein Abstützelement verwendet wird, welches den Bolzen oder die Schraube gegenüber dem Rahmenschloss abstützt, wobei dann die Strebe oder die an der Strebe befestigte Halterung als Abstützung für den Befestigungsbereich dient. Dazu ist es jedoch notwendig, dass die Strebe bzw. die Halterung eine Stirnfläche aufweist, die in wenigstens einer Richtung einen Durchmesser aufweist, der größer ist als der Durchmesser der Befestigungsöffnung des an der Strebe gehaltenen Rahmenschlosses in der gleichen Richtung. Um von solchen Vorgaben unabhängig zu sein, ist es bevorzugt, dass ein weiteres mit dem Bolzen oder der Schraube bewegliches Abstützelement zur Abstützung des Befestigungsbereichs an der Strebe oder der Halterung an der Strebe mit einer weiteren Abstützelementöffnung zur Aufnahme des Bolzens oder der Schraube vorgesehen ist. Dabei weist das weitere Abstützelement entsprechend dem ersten Abstützelement einen Durchmesser in wenigstens einer Richtung auf, der größer ist als der Durchmesser der Befestigungsöffnung in wenigstens einer Richtung, so dass bei der Befestigung der Befestigungsbereich auf dem weiteren Abstützmittel an wenigstens zwei Punkten aufliegt und an diesem abgestützt ist. Der Durchmesser der weiteren Abstützelementöffnung ist dabei vorzugsweise nur um das zum Durchführen des Bolzens oder der Schraube notwendige Maß größer als der Durchmesser des Bolzens bzw. der Schraube, so dass eine gute Abstützung des weiteren Abstützelements auf der Strebe bzw. der Halterung an der Strebe ermöglicht wird.

Grundsätzlich können die Abstützelemente beliebig geformt sein. Es ist jedoch bevorzugt, dass das Abstützelement und/oder das weitere Abstützelement scheibenförmig ausgebildet sind. Es ergibt sich so zum einen eine besonders flache Bauform, zum anderen sind die dann ähnlich einer Unterlegscheibe ausgebildeten Abstützelemente einfach herstellbar.

Weiterhin ist es bevorzugt, dass das Abstützelement und/oder das weitere Abstützelement in einer in der Befestigungslage zu einer Ebene des Befestigungsbereichs parallelen Ebene einen Querschnitt aufweisen, der die Form wenigstens eines Segments einer Ellipse oder eines Kreises aufweist. Solche Abstützelemente beanspruchten wegen des Fehlens von hervorstehenden Kanten oder Ecken nur eine besonders geringe Fläche, so dass bei gleichzeitig weiter Verschiebbarkeit eine kompakte Bauweise verwirklicht werden kann. Das Segment weist dabei vorzugsweise einen Segmentwinkel von mehr als 180° auf. Dies ermöglicht eine besonders gute Abstützung auf dem Befestigungsbereich.

Dabei ist es besonders bevorzugt, dass die Abstützelementöffnung und/oder die weitere Abstützelementöffnung exzentrisch zu einem geometrischen Schwerpunkt des Abstützelements bzw. des weiteren Abstützelements angeordnet ist. In diesem Fall kann die Befestigungsöffnung auch nahe eines Aufnahme- oder Lagerschenkels des Rahmenschlosses angeordnet werden, wobei trotz eines großen Durchmessers des Abstützelements durch entsprechende Drehung des Abstützelements der in der Abstützelementöffnung gehaltene Bolzen oder die Schraube in einen Bereich der Befestigungsöffnung nahe einem der Schenkel des Rahmenschlosses positioniert werden kann. Es wird so ein großer Bereich möglicher Lagen der Abstützelementöffnung und damit des Bolzens oder der Schraube ermöglicht, ohne den Aufnahmebereich zusätzlich einzuschränken.

Grundsätzlich können die Abstützelemente verschieden ausgebildet sein. Es ist jedoch bevorzugt, dass die Abstützelemente gleich ausgebildet sind. Dies erleichtert zum einen die Fertigung. Zum anderen wird die Handhabung vereinfacht, da es einfacher ist, gleiche Abstützelemente aufeinander auszurichten, als voneinander verschiedene Abstützelemente.

Um die Handhabung von zwei Abstützelementen weiter zu erleichtern, ist es bevorzugt, dass die Abstützelemente so miteinander verbunden sind, dass sie in einer Befestigungslage an voneinander abgewandten Seiten des Befestigungsbereichs anliegen. Unter einer Befestigungslage wird dabei eine Lage der Abstützelemente verstanden, in der sie bei erfolgter Befestigung angeordnet sein können. Die miteinander verbundenen Abstützelemente umschließen also bei einer Befestigung wenigstens in kleinen Bereichen die Ränder der Befestigungsöffnung.

Grundsätzlich können die Abstützelemente in beliebiger Art und Weise miteinander verbunden sein. So wäre es möglich, dass die Abstützelemente mittels einer Röhre verbunden sind, die mit den Abstützelementöffnungen in den Abstützelementen fluchtet und durch die der Bolzen durchführbar ist. So verbundene Abstützelemente zeichnen sich durch einen besonders geringen Raumbedarf aus.

Alternativ ist es bevorzugt, dass die Verbindung bezüglich des geometrischen Schwerpunkts des Abstützelements auf einer der Öffnung abgewandten Seite angeordnet ist. Eine solche Verbindung der Abstützelemente ist besonders einfach herstellbar, da diese nur am Rand der Abstützelemente angeordnet zu werden braucht. Weiterhin ist bei einer exzentrischen Lage der Abstützelementöffnung ein schmaler Bereich zwischen einem Rand des Abstützelements und der Abstützelementöffnung leicht in den Randbereich der Befestigungsöffnung zu bringen, wobei dann die Verbindungsstelle innerhalb der Befestigungsöffnung liegen kann, so dass insgesamt wiederum eine besonders platzsparende Anordnung erreicht werden kann.

Im Hinblick auf eine besonders einfache Fertigung ist es bevorzugt, dass die Abstützelemente am Rand durch einen Steg miteinander verbunden sind. Besonders bevorzugt sind die durch den Steg miteinander verbundenen Abstützelemente aus einem Blech gestanzt und dann in eine U-Form gebogen, so dass die Abstützelemente im Wesentlichen parallel zueinander angeordnet sind. Eine solche Abstützelementanordnung ist daher mit sehr geringem Aufwand herstellbar.

Um die Montage zu vereinfachen, ist es bevorzugt, dass mindestens eines der Abstützelemente so ausgebildet ist, dass die verbundenen Abstützelemente nach Einführen des Bolzens oder der Schraube verliersicher in der Befestigungsöffnung gehalten sind. Hierzu wird die Verbindung zweckmäßig so an den Abstützelementen angeordnet, dass ein Durchführen nur eines der Abstützelemente durch die Befestigungsöffnung noch ermöglicht wird, wobei jedoch nach Einführen des Bolzens oder der Schraube die verbundenen Abstützelemente in der Befestigungsöffnung gehalten bleiben. Beispielsweise können die Abstützelemente dazu eine Kreissegmentform mit einem Segmentwinkel von mehr als etwa 240° aufweisen.

Grundsätzlich genügt es, dass die erfindungsgemäße Befestigung nur für eine Befestigungsöffnung vorgesehen wird, soweit die Befestigung an dem Befestigungsbereich auf der anderen Seite wenigstens eine Drehung in der durch die beiden Streben aufgespannten Ebene ermöglicht. Es ist jedoch bevorzugt, dass auch der andere Befestigungsbereich eine Befestigungsöffnung aufweist, und dass wenigstens ein entsprechendes Abstützmittel entsprechend einem der vorhergehenden Ansprüche zur Abstützung eines Bolzens oder einer Schraube in der Befestigungsöffnung in dem anderen Befestigungsbereich vorgesehen ist. Mit anderen Worten werden für beide Streben bzw. für beide Befestigungsbereiche Befestigungsöffnungen und Abstützmittel mit den zuvor beschriebenen Merkmalen bereitgestellt.

Grundsätzlich können dabei für die Streben jeweils verschiedene Abstützmittel verwendet werden, zur einfacheren Herstellung und Montage werden jedoch vorzugsweise gleiche Abstützmittel verwendet.

Die Erfindung wird nun weiter beispielhaft anhand der Zeichnungen erläutert. Es zeigen:
- Fig. 1: eine schematische Draufsicht auf ein Gehäuse eines Rahmenschlosses nach einer bevorzugten Ausführungsform der Erfindung,
- Fig. 2: eine schematische Ansicht eines Schnitts durch das Gehäuse in Fig. 1 entlang der Ebene A-A,
- Fig. 3: eine perspektivische Ansicht eines Abstützkörpers mit zwei durch einen Steg miteinander verbundenen Abstützelementen des Rahmenschlosses,
- Fig. 4: eine Draufsicht auf die Abstützelemente in Fig. 3,
- Fig. 5: eine Seitenansicht auf die miteinander verbundenen Abstützelemente in Fig. 3, und
- Fig. 6: das Gehäuse in Fig. 1 mit zwei Abstützkörpern in verschiedenen Lagen in zwei Befestigungsöffnungen in dem Gehäuse in Fig. 1.

Ein Rahmenschloss zum Anbau an Streben eines Hinterbaus eines Fahrrads nach einer bevorzugten Ausführungsform der Erfindung umfasst ein Rahmenschlossgehäuse 10, zwei gleich ausgebildete Abstützkörper 12 und 12' sowie zwei in den Figuren nicht gezeigte, gleich ausgebildete Befestigungsschrauben mit je einem Kopf und einem daran gehaltenen Gewindeschaft. Weiterhin umfasst das Rahmenschloss einen Schließmechanismus, der grundsätzlich bekannt und daher der Übersichtlichkeit halber in den Figuren nicht gezeigt ist.

Das aus zwei Blechen zusammengenietete Rahmenschlossgehäuse 10 umfasst an einem Basisabschnitt 14 einen ringsegmentförmig gebogenen Lagerschenkel 16 sowie einen ebenfalls ringsegmentförmig gebogenen Aufnahmeschenkel 18. Zwischen den Enden des Lagerschenkels 16 und des Aufnahmeschenkels 18 befindet sich ein Schließbereich 20, der durch einen in dem Lagerschenkel 16 gelagerten, in den Figuren nicht gezeigten Rundbügel absperrbar ist, wenn dieser aus dem Lagerschenkel 16 über den Schließbereich 20 mit einem Ende in den Aufnahmeschenkel 18 geschwenkt wird. Der Schließmechanismus des Rahmenschlosses befindet sich typischerweise im Bereich des Basisabschnitts 14.

Auf den einander zugewandten Innenseiten des Lagerschenkel 16 und des Aufnahmeschenkels 18 sind jeweils von diesen teilweise umschlossene, kreissegmentförmige Versteifungsflächen 22 und 22' ausgebildet, so dass sich in dem Rahmenschloss ein U-förmiger Aufnahmebereich 24 für ein Hinterrad eines Fahrrades ergibt. Der Schließbereich 20 erstreckt sich bei in den Aufnahmebereich aufgenommenem Hinterrad wenigstens teilweise in den Speichenbereich des Hinterrades hinein.

In den Versteifungsflächen 22 und 22' sind, wie auch in dem Basisabschnitt 14, Verbindungsniete 26 angebracht, um das aus zwei Blechteilen gefertigte Gehäuse zusammenzuhalten.

Zwischen den Verbindungsnieten 26 sind in der Versteifungsfläche 22 und in der Versteifungsfläche 22' jeweils ein Befestigungsbereich 28 bzw. 28' angeordnet, in denen sich jeweils eine Befestigungsöffnung 30 bzw. 30' befindet. Die Versteifungsflächen 22 und 22' einschließlich der Befestigungsbereiche 28 und 28' und der Befestigungsöffnungen 30 und 30' sind spiegelbildlich zu der durch die Linie A-A gekennzeichnete Ebene ausgebildet, so dass im weiteren nur Bezug auf die Versteifungsfläche 22 genommen wird.

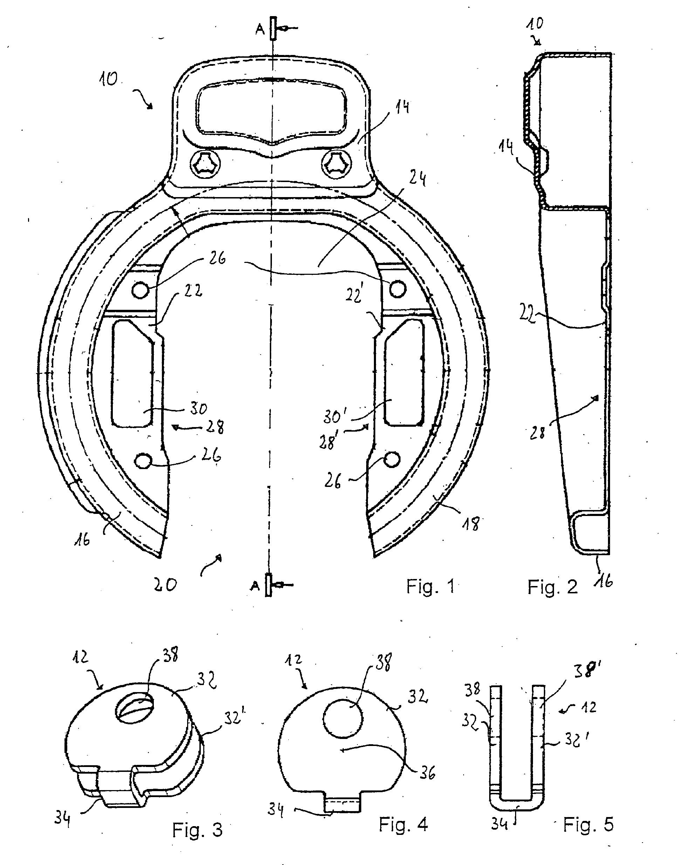

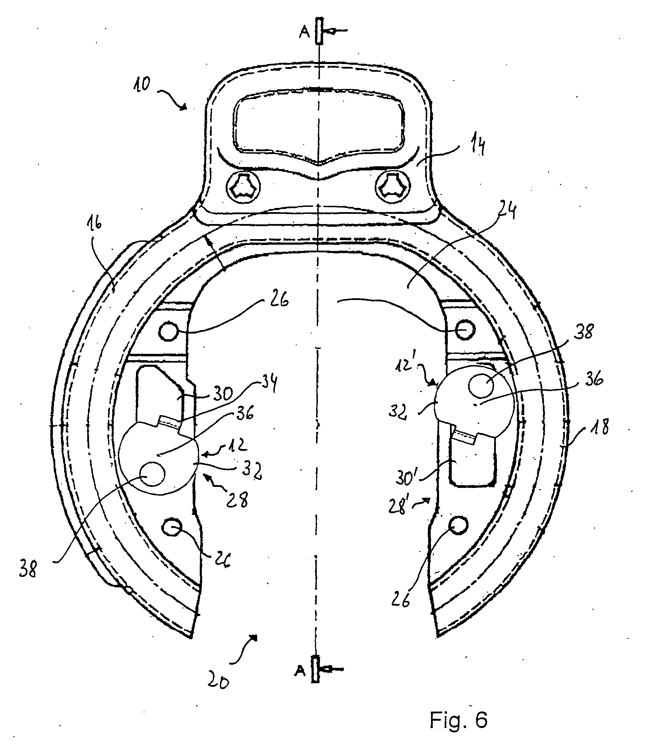

Die Befestigungsöffnung 30 weist eine im Wesentlichen rechteckige Form auf, die jedoch in Richtung des Basisabschnitts 14 in Richtung auf den Aufnahmebereich 24 hin abgeschrägt ist. Die Höhe der Befestigungsöffnung 30, das heißt deren maximale Weite in einer Richtung parallel zu der Einschubrichtung des Hinterrades in den Aufnahmebereich 24, in den Fig. 1 und 6 die Richtung der Linie A-A, ist dabei wesentlich, im Beispiel etwa dreimal, größer als deren Breite, das heißt die maximale Weite in einer zu der Einschubrichtung orthogonal verlaufenden Richtung.

Der einstückig ausgebildete Abstützkörper 12 weist zwei parallel zueinander angeordnete, gleiche, scheibenförmige Abstützelemente 32 und 32' auf, die an einer Außenkante durch einen Steg 34 miteinander verbunden sind (vgl. Fig. 3), so dass der Abstützkörper 12 in einer Seitenansicht im Wesentlichen U-Form aufweist (vgl. Fig. 5). Der Abstand der Abstützelemente 32 bzw. 32', das heißt die Basis des U, entspricht dabei im Wesentlichen der Dicke des Befestigungsbereichs 28, so dass dieser im Bereich der Befestigungsöffnung 30 zwischen die Abstützelemente 32 und 32' an diesen anliegend aufnehmbar ist.

Die Abstützelemente 32 und 32' weisen die Form eines Kreissegments auf, wobei an einer Sehne des Kreissegments mittig der Steg 34 angeordnet ist. Der Kreissegmentwinkel beträgt dabei etwa 265°.

Der Durchmesser des der Kreissegmentform der Abstützelemente 32 und 32' zugrunde liegenden Kreises ist größer als die Breite der Befestigungsöffnung 30, aber noch so klein gewählt, dass der Abstützkörper 12 in einer leicht gekippten Stellung über einen zwischen der Befestigungsöffnung 30 und dem Aufnahmebereich 24 ausgebildeten Steg des Befestigungsbereichs 28 in die Befestigungsöffnung 30 geschoben und dann in eine geeignete Position darin bewegt werden kann.

Exzentrisch zu einem geometrischen Schwerpunkt 36 der Abstützelemente 32 und 32' ist eine Abstützelementöffnung 38 ausgebildet, deren Mittelpunkt im Wesentlichen auf einer Geraden durch die Mitte des Stegs 34 und den geometrischen Schwerpunkt 38 der Abstützelemente 32 und 32' auf der dem Steg 34 abgewandten Seite der Geraden liegt.

Der Durchmesser der Abstützelementöffnung 38 ist dabei zum einen nur unwesentlich größer als der Durchmesser des Gewindebolzens der Schraube und kleiner als der Durchmesser des Kopfes der Schraube. Zum anderen ist der Durchmesser der Abstützelementöffnung 38 wesentlich kleiner als die Höhe und die Breite der Befestigungsöffnung 30. Im Beispiel ist die Höhe der Befestigungsöffnung 30 etwa viermal und die Breite der Befestigungsöffnung etwa zweimal so groß wie der Durchmesser der Abstützelementöffnung 38, so dass diese bzw. ein darin eingeführter Gewindebolzen in der Befestigungsöffnung 30 über entsprechende Distanzen kontinuierlich unabhängig in zwei zueinander orthogonalen Richtungen bewegbar ist.

Zur Befestigung werden die Abstützkörper 12 bzw. 12' in die Befestigungsöffnungen 30 und 30' eingeführt, indem diese in einer leicht gekippten Stellung jeweils über einen zwischen der Befestigungsöffnung 30 bzw. 30' und dem Aufnahmebereich 24 ausgebildeten Steg des Befestigungsbereichs 28 bzw. 28' in die Befestigungsöffnung 30 geschoben und dann in eine geeignete Position darin bewegt werden. Entsprechende mögliche Lagen der Abstützkörper 12 bzw. 12' sind beispielhaft in Fig. 6 gezeigt.

Sodann werden die Befestigungsschrauben durch die Abstützelementöffnungen 38 und die Befestigungsöffnung 30 bzw. 30' geführt. Zur Anpassung der Lage der Befestigungsschrauben an Sockel mit Innengewinde an Streben des Hinterbaus werden die Abstützkörper 12 bzw. 12' zusammen mit den durch sie hindurchgeführten Befestigungsschrauben durch Verschiebungen und/ oder Drehungen der Abstützkörper 12 bzw. 12' in eine geeignete Position relativ zu dem Rahmenschlossgehäuse 10 gebracht.

Der Durchmesser des der Kreissegmentform der Abstützelemente 32 und 32' zugrunde liegenden Kreises ist soviel größer als die maximalen Weiten der Befestigungsöffnung 30 in zwei zueinander orthogonalen Richtungen, d.h. die Höhe und Breite, gewählt, dass das Abstützelement in allen so kontinuierlich erreichbaren Lagen an wenigstens zwei Punkten auf dem Befestigungsbereich 30 aufliegt. Weiterhin ist der Durchmesser in Verbindung mit dem Kreissegmentwinkel von etwa 265° und der Form des Steges 34 so gewählt, dass nach Einführen des Gewindebolzens in die Befestigungsöffnung 30 der Abstützkörper 12 bei Bewegungen in der Befestigungsöffnung 30 verliersicher in dieser gehalten ist.

Obwohl die Befestigungsöffnungen 30 und 30' sehr nahe an dem Lagerschenkel 16 bzw. dem Aufnahmeschenkel 18 angeordnet sind, ist es durch die exzentrische Lage der Abstützelementöffnungen 38 möglich, durch entsprechende Drehung des Abstützelements 12 bzw. 12' die durch das Befestigungselement hindurchgeführte Befestigungsschraube nahe an den äußeren Rand der Befestigungsöffnung 30 bzw. 30' zu führen, wobei jedoch trotzdem die Abstützelemente 32 und 32' der Abstützkörper 12 und 12' an zwei sich gegenüberliegenden Seiten der Befestigungsöffnung 30 auf den Befestigungsbereichen 24 und 24' aufliegen.

Bei der Befestigung durch Eindrehen der Befestigungsschraube in das Innengewinde in dem Sockel an der entsprechenden Strebe des Hinterbaus bietet das Abstützelement 32 dann eine Abstützung für den Kopf der verwendeten Befestigungsschraube, so dass der Kopf der Schraube und das Abstützelement 32 ein Abstützmittel im Sinne der Erfindung bilden. Das Abstützelement 32' dagegen dient zur Abstützung des Befestigungsbereichs 28 gegen eine an der entsprechenden Strebe des Hinterbaus gehaltene Halterung.

Dadurch dass die Abstützkörper 12 und 12' bzw. die entsprechenden Abstützelemente somit in den Befestigungsöffnungen 30 unabhängig in zwei zueinander orthogonalen Richtungen, nämlich parallel zu der Richtung A-A und senkrecht dazu, bewegbar sind, kann das Rahmenschloss an sehr unterschiedlichen Hinterbauten mit sehr verschiedenen Strebengeometrien leicht angebracht werden. Die verliersichere Halterung der Abstützkörper 12 und 12' in den Befestigungsöffnungen 30 und 30' erleichtert dabei die Montage an einem Hinterbau, da neben dem Rahmenschloss nur die Befestigungsschrauben gehalten werden müssen.

### Bezugszeichenliste

- 10: Rahmenschlossgehäuse
- 12, 12': Abstützkörper
- 14: Basisabschnitt
- 16: Lagerschenkel
- 18: Aufnahmeschenkel
- 20: Schließbereich
- 22, 22': Versteifungsflächen
- 24: Aufnahmebereich
- 26: Verbindungsniete
- 28, 28': Befestigungsbereiche
- 30, 30': Befestigungsöffnungen
- 32, 32': Abstützelemente
- 34: Steg
- 36: geometrischer Schwerpunkt
- 38, 38': Abstützelementöffnung

## Patentansprüche

1. Rahmenschloss zum Anbau an einen Hinterbau eines Zweirades mit zwei an voneinander beabstandeten Streben des Hinterbaus zu befestigenden Befestigungsbereichen (28, 28'), von denen mindestens einer eine Befestigungsöffnung (30, 30') aufweist, durch die ein Bolzen zur Befestigung an einer der Streben oder einer Halterung an einer der Streben führbar ist, und
wenigstens einem zusammen mit dem Bolzen beweglichen Abstützmittel (32, 32') zum Abstützen des in der Befestigungsöffnung (30, 30') angeordneten Bolzens auf dem Befestigungsbereich (28, 28'), wobei die Befestigungsöffnung (30, 30') in wenigstens zwei zueinander orthogonalen, quer zur Durchtrittsrichtung des Bolzens verlaufenden Richtungen einen größeren Durchmesser aufweist als der Bolzen, so dass die Lage des durch das Abstützmittel (32, 32') auf dem Befestigungsbereich (28, 28') abgestützten Bolzens in der Befestigungsöffnung (30, 30') unabhängig in zwei zueinander orthogonalen Richtungen an eine Geometrie des Hinterbaus anpassbar ist.

2. Rahmenschloss nach Anspruch 1,
**dadurch gekennzeichnet,**
**dass** das Abstützmittel (32, 32') einen mit dem Bolzen verbundenen Kopf oder eine auf diesen aufschraubbare Mutter und ein Abstützelement (32, 32') mit einer Abstützelementöffnung (38), durch die der Bolzen, nicht aber der Kopf bzw. die Mutter führbar ist, aufweist, wobei bevorzugt ein weiteres mit dem Bolzen bewegliches Abstützelement (32, 32') zur Abstützung des Befestigungsbereichs (28, 28') an der Strebe oder der Halterung an der Strebe mit einer weiteren Abstützelementöffnung (38) zur Aufnahme des Bolzens vorgesehen ist.

3. Rahmenschloss nach Anspruch 2,
**dadurch gekennzeichnet,**
**dass** das Abstützelement (32) und/oder das weitere Abstützelement (32') scheibenförmig ausgebildet sind und/oder dass das Abstützelement (32) und/oder das weitere Abstützelement (32') in einer in der Befestigungslage zu einer Ebene des Befestigungsbereichs (28, 28') parallelen Ebene einen Querschnitt aufweisen, der die Form wenigstens eines Segments einer Ellipse oder eines Kreises aufweist.

4. Rahmenschloss nach Anspruch 2 oder 3,
**dadurch gekennzeichnet,**
**dass** die Abstützelementöffnung (38) und/oder die weitere Abstützelementöffnung (38') exzentrisch zu einem geometrischen Schwerpunkt (36) des Abstützelements (32) bzw. des weiteren Abstützelements (32') angeordnet ist.

5. Rahmenschloss nach einem der Ansprüche 2 bis 4,
**dadurch gekennzeichnet,**
**dass** die Abstützelemente (32, 32') gleich ausgebildet sind.

6. Rahmenschloss nach einem der Ansprüche 2 bis 5,
**dadurch gekennzeichnet,**
**dass** die Abstützelemente (32, 32') so miteinander verbunden sind, dass sie in einer Befestigungslage an voneinander abgewandten Seiten des Befestigungsbereichs (28, 28') anliegen.

7. Rahmenschloss nach Anspruch 5 oder 6,
**dadurch gekennzeichnet,**
**dass** die Verbindung (34) bezüglich des geometrischen Schwerpunkts (36) des Abstützelements (32, 32') auf einer der Abstützelementöffnung (38) abgewandten Seite angeordnet ist.

8. Rahmenschloss nach Anspruch 6 oder 7,
**dadurch gekennzeichnet,**
**dass** die Abstützelemente (32, 32') randseitig durch einen Steg (34) miteinander verbunden sind.

9. Rahmenschloss nach einem der Ansprüche 6 bis 8,
**dadurch gekennzeichnet,**
**dass** mindestens eines der Abstützelemente (32, 32') so ausgebildet ist, dass die verbundenen Abstützelemente (32, 32') nach Einführen des Bolzens verliersicher in der Befestigungsöffnung (30, 30') gehalten sind.

10. Rahmenschloss nach einem der vorhergehenden Ansprüche,
**dadurch gekennzeichnet,**
**dass** auch der andere Befestigungsbereich (28') eine Befestigungsöffnung (30') aufweist, und
**dass** wenigstens ein entsprechendes Abstützmittel (32, 32') entsprechend einem der vorhergehenden Ansprüche zur Abstützung eines Bolzens in der Befestigungsöffnung (30') in dem anderen Befestigungsbereich (28') vorgesehen ist.
